# EUROPÄISCHE PATENTSCHRIFT

(11) **EP 1 993 761 B1**
(45) Veröffentlichungstag und Bekanntmachung des Hinweises auf die Patenterteilung: **06.04.2011**
(21) Anmeldenummer: 06828632.7
(22) Anmeldetag: 08.12.2006
(51) Int. Cl.: B23B 1/00, B24B 1/00, B24B 5/01

(54) **Verfahren zur Fertigung rotationssymmetrischer Flächen an einem Werkstück**
Process for the manufacture of rotationally symmetrical areas on a workpiece
Procédé de fabrication de surfaces à symétrie de rotation sur une pièce d'oeuvre

(30) Priorität: 01.03.2006 DE 102006009276
(43) Veröffentlichungstag der Anmeldung: 26.11.2008
(73) Patentinhaber: FELSOMAT GmbH & Co. KG, 75203 Königsbach-Stein (DE)
(72) Erfinder: JAEGER, Helmut F., 75203 Königsbach-Stein (DE)
(74) Vertreter: Kohler Schmid Möbus
(86) Internationale Anmeldenummer: PCT/DE2006/002182
(87) Internationale Veröffentlichungsnummer: WO 2007/098725

(56) Entgegenhaltungen:
- EP-B1- 0 073 318
- EP-B1- 0 348 533
- WO-A-98/03303
- JP-A- 61 197 102
- DATABASE WPI Week 198451 Derwent Publications Ltd., London, GB; AN 1984-317007 XP002426684 -& SU 1 088 887 A (PESTUNOV V M) 30. April 1984 (1984-04-30)

## Beschreibung

### Hintergrund der Erfindung

Die Erfindung betrifft ein Verfahren zur Fertigung einer rotationssymmetrischen Fläche an einem Werkstück, wobei das Werkstück rotiert und eine Werkzeugschneide mit der Oberfläche des Werkstücks in Eingriff gebracht wird.

Ein solches Verfahren ist bekannt geworden durch die DE 10 2004 026 675 B3.

Um rotationssymmetrische Flächen an Werkstücken zu erstellen, sind verschiedene Bearbeitungsverfahren bekannt, insbesondere Schleifen und Drehen.

Beim Schleifen und Drehen wird das unfertige Werkstück, das noch um das Aufmaß größer ist als das zu erstellende Werkstück, in ein Spannmittel einer Werkstückspindel eingespannt und in Rotation versetzt. An das rotierende Werkstück wird ein Werkzeug mit einer Werkzeugschneide herangeführt, die mit der Oberfläche des Werkstücks in Eingriff tritt und von diesem Material abträgt. Beim Schleifen ist das Werkzeug eine rotierende Schleifscheibe, die mit geeigneten Schleifmitteln wie Diamantkörnern besetzt ist. Beim Drehen ist das Werkzeug ein nicht-rotierendes Bauteil mit einer hochfesten, harten Kante, beispielsweise ein Drehstahl oder eine keramische Wendeschneidplatte.

Die Werkzeugschneide wird entsprechend der gewünschten Kontur des zu erstellenden Werkstücks am Werkstück entlang geführt. Die Kontur ist dabei der Umriss des Werkstücks in einer Ebene, die die Drehachse des Werkstücks und den Kontaktpunkt oder Kontaktbereich von Werkzeugschneide und Werkstück enthält.

Beim Führen der Werkzeugschneide entlang der gewünschten Kontur entstehen, insbesondere beim Drehen, am Werkstück Vorschubriefen (auch bezeichnet als Drall des Werkstücks), die im Wesentlichen die Form eines Gewindes aufweisen. Diese Vorschubriefen beeinträchtigen die Verwendungsmöglichkeiten des Werkstücks und sind daher unerwünscht.

Aus dem Stand der Technik sind Drehverfahren bekannt, die das Entstehen von Vorschubriefen verhindern sollen ("drallfreies Drehen").

Aus der DE 199 63 897 A1, die ein Drehverfahren beschreibt, ist es bekannt, eine gerade Werkszeugschneide in linearer Bewegung tangential an einem zylinderförmigen Werkstück entlang zu führen. Die Werkzeugschneide liegt dabei in der Tangentialebene des Werkstücks, ist aber gegenüber der linearen Bewegungsrichtung abgewinkelt.

Aus der DE 10 2004 026 675 B3, die ebenfalls ein Drehverfahren beschreibt, ist es bekannt, ein Werkzeug drehbar auf einer Schwenkachse zu lagern, so dass eine gerade Werkzeugschneide in einer Kreisbewegung an einem Werkstück vorbeigeführt werden kann. Die Schwenkachse kann dabei parallel zur Drehachse ausgerichtet sein, um eine Zylindermantelfläche eines Werkstücks zu erstellen. Die Schwenkachse kann auch senkrecht zur Drehachse ausgerichtet sein und diese kreuzen, um eine Stirnfläche eines Werkstücks zu erstellen. Die Schneidkante ist dabei jeweils gegenüber der Schwenkrichtung angewinkelt.

Diese Verfahren des Standes der Technik bringen eine Reihe von Nachteilen mit sich. Zum einen erfordern diese eine spezielle Maschinen-Kinematik um die Werkzeugschneiden auf der vorgesehenen Bahn relativ zum Werkstück führen zu können. Mit anderen Worten, diese Verfahren können mit herkömmlichen Drehmaschinen nicht ausgeführt werden, da diese nicht die erforderlichen Freiheitsgrade der Werkzeugbewegung besitzen. Weiterhin sind sehr teure Werkzeuge erforderlich, denn die Qualitätsanforderungen an die Werkzeugschneiden sind sehr hoch. Da der Kontaktpunkt von Werkzeug und Werkstück bei diesen Verfahren entlang der Werkzeugschneide wandert, führen schon kleinste Ausbrüche an der Werkzeugschneide zu Ausschussteilen. Schließlich können aufgrund der hohen Belastungen an den Werkzeugschneiden mit den bekannten Verfahren nur Schnitttiefen von ca. 0,05-0,1 mm realisiert werden, wohingegen ein typisches Aufmaß von Werkstücken 0,2-0,3 mm beträgt. Ein Werkstück muss daher zunächst konventionell vorgedreht werden, und wird sodann mit einem der obigen Verfahren drallfrei geschlichtet. Dadurch wird die drallfreie Bearbeitung insgesamt recht zeitaufwendig.

Die EP 0 348 533 B1, die als nächstliegender Stand der Technik angesehen wird, beschreibt den Ablauf eines Einstichdrehens. Der Vorschub der Werkszugschneide erfolgt ausschließlich mit abgehobener Schneide ohne Kontakt zum Werkstück.

### Aufgabe der Erfindung

Aufgabe der vorliegenden Erfindung ist es demgegenüber, ein Verfahren bereitzustellen, mit der drallfreie, rotationssymmetrische Flächen an einem Werkstück einfach und kostengünstig hergestellt werden können, insbesondere wobei konventionelle Drehmaschinen und Werkzeuge zum Einsatz kommen können.

### Kurze Beschreibung der Erfindung

Diese Aufgabe wird gelöst durch ein Verfahren der eingangs vorgestellten Art, mit folgenden Schritten:
a) Die Werkzeugschneide wird in das rotierende Werkstück eingestochen, wobei die Werkzeugschneide auf die zu erzeugende Oberfläche des Werkstücks zu bewegt wird,
   und wobei ein neuer Konturabschnitt (=Rille) am Werkstück geschaffen wird, der eine Breite B aufweist gemessen parallel zu der zu erzeugenden Oberfläche des Werkstücks,
   wobei bei Schritt a) die Werkzeugschneide während mindestens einer Umdrehung des Werkstücks in der eingestochenen Position verbleibt,
b) Die Werkzeugschneide wird anschließend umpositioniert mit folgenden Unterschritten:
   b1) Die Werkzeugschneide wird vom Werkstück abgehoben, wobei die Werkzeugschneide eine Bewegungskomponente senkrecht weg von der zu erzeugenden Oberfläche des Werkstücks erfährt;
   b2) Die Werkzeugschneide wird vorgeschoben, wobei die Werkzeugschneide eine Bewegungskomponente parallel zur zu erzeugenden Oberfläche des Werkstücks erfährt;
   wobei im gesamten Schritt b) ein maximaler Abhebeweg AW senkrecht von der zu erzeugenden Oberfläche des Werkstücks weg kleiner ist als das lokale Aufmaß LA des Werkstücks.
   wobei die gesamte Länge der Verfahrstrecke VP der Werkzeugschneide parallel zur zu erzeugenden Oberfläche des Werkstücks in den Schritten a) und b) kleiner oder gleich der Breite B ist;
c) die Schritte a) bis b) werden mehrfach wiederholt.

Kern des erfindungsgemäßen Verfahrens ist es, an einem Werkstück eine Oberfläche zu erzeugen, die im Wesentlichen nur durch Einstechen des Werkzeugs entstanden ist.

Dazu wird viele Male (typischerweise einige hundert Male oder mehr) das Werkzeug in das Werkstück eingestochen. Nach jedem Einstechen wird das Werkzeug abgehoben und geringfügig verschoben, typischer Weise in axialer Richtung bezüglich der Drehachse. Bei diesem Umpositionieren bleibt das Werkzeug ständig oder zeitweise in Kontakt mit dem Werkstück und trägt Material vom Werkstück ab. Anschließend erfolgt das nächste Einstechen. Der Abstand benachbarter Einstichpositionen (d.h. die Verfahrstrecke VP) ist kleiner oder gleich der Breite des beim Einstechen neu erzeugten Konturabschnitts am Werkstück; diese Breite entspricht im Wesentlichen der Breite der Werkzeugschneide, die beim Einstechen aktiv ist (d.h. am Materialabtrag teilnimmt). Dadurch ist sichergestellt, dass die am Werkstück erzeugte Kontur ausschließlich aus Konturabschnitten aufgebaut wird, die durch Einstechen erzeugt wurden. Ein etwaiger, beim Umpositionieren des Werkzeugs erzeugter, drallbehafteter Konturabschnitt am Werkstück wird durch das nachfolgende Einstechen wieder entfernt.

Ein durch Einstechen erzeugter Konturabschnitt des Werkstücks ist stets drallfrei. Infolgedessen ist auch die durch das erfindungsgemäße Verfahren erzeugte rotationssymmetrische Fläche, die aus unmittelbar benachbarten, durch Einstechen erzeugten Konturabschnitten besteht, drallfrei.

Dadurch, dass im gesamten Schritt b) ein maximaler Abhebeweg AW senkrecht von der zu erzeugenden Oberfläche des Werkstücks weg kleiner ist als das lokale Aufmaß LA des Werkstücks, wird die Werkzeugschneide während des Umpositionierens, insbesondere während Unterschritt b2), zum Materialabtrag eingesetzt. Während des Umpositionierens kann also die Werkzeugschneide zum Längsdrehen (Vorschubdrehen) genutzt werden. Vor- und Fertigbearbeitung wird in einem Arbeitsgang durchgeführt. Beim Materialabtrag des Umpositionierens wird außerdem ein anderer Abschnitt der Werkzeugschneide beansprucht als beim Einstechen (Einstechdrehen), so dass der Verschleiß an dem beim Einstechen aktiven Abschnitt der Werkzeugschneide reduziert werden kann. Das lokale Aufmaß LA bezeichnet den zu entfernenden Materialüberstand des Werkstücks gegenüber der zu erzeugenden Oberfläche, gemessen senkrecht zur zu erzeugenden Oberfläche, im gerade in Bearbeitung befindlichen Bereich des Werkstücks. Erfindungsgemäß kann man insbesondere beim Hartdrehen hervorragende Oberflächenqualitäten erreichen.

Mit mindestens einer Umdrehung wird die der drallfreie, neue Konturabschnitt über den gesamten Umfang des Werkstücks stufenfrei erzeugt. Bevorzugt bleibt die Werkzeugschneide im eingestochenen Zustand ortsfest. Zur Synchronisation von Werkstück und Werkzeugschneide kann erfindungsgemäß eine elektronische Steuerung eingesetzt werden.

Das erfindungsgemäße Verfahren kann sowohl beim Drehen, insbesondere Hartdrehen, als auch beim Schleifen eingesetzt werden. Es ist auf jeder ausreichend steifen Dreh-oder Schleifmaschine einsetzbar.

Man beachte, dass die zu erzeugende Oberfläche des Werkstücks gemäß der Erfindung nicht parallel zur Drehachse des Werkstücks zu verlaufen braucht, d.h. es können nicht nur Zylindermantelflächen, sondern auch Konusmantelflächen oder gekrümmte Flächen gefertigt werden.

### Bevorzugte Varianten der Erfindung

Bei einer bevorzugten Variante des erfindungsgemäßen Verfahrens beträgt der Abhebeweg AW 0,02 mm oder weniger, insbesondere ca. 0,01 mm. Diese Abhebewege haben sich in der Praxis, insbesondere beim Hartdrehen, bewährt. Sie sind ausreichend groß, um den beim Längsdrehen entstehenden Drall wieder entfernen zu können, und so klein, dass die erforderliche Zeit zum Abheben im Verfahrensablauf kaum ins Gewicht fällt.

Bei einer anderen, bevorzugten Verfahrensvariante beträgt das lokale Aufmaß LA 0,1 mm bis 0,4 mm, insbesondere ca. 0,3 mm. Ein lokales Aufmaß in diesem Intervall konnte in der Praxis, insbesondere beim Hartdrehen, mit dem erfindungsgemäßen Verfahren gut gehandhabt werden.

Bevorzugt ist auch eine Verfahrensvariante, die dadurch gekennzeichnet ist, dass bei Schritt a) die Werkzeugschneide während genau einer Umdrehung, des Werkstücks in der eingestochenen Position verbleibt. Mit genau einer Umdrehung läuft die Verfahrensvariante besonders schnell und damit wirtschaftlich ab.

Besonders bevorzugt ist eine Verfahrensvariante, bei der der Unterschritt b1) vor dem Unterschritt b2) erfolgt. Mit dieser Variante werden die Schritte b1) und b2) entkoppelt, was die Verfahrenssteuerung und Kontrolle vereinfacht. Die Aufgaben von Abheben und Vorschub sind voneinander getrennt, und die Unterschritte b1) und b2) können für diese jeweiligen Aufgaben einzeln optimiert werden, insbesondere bezüglich der Geschwindigkeit der Bewegung und der Bewegungsrichtung der Werkzeugschneide.

Eine Weiterentwicklung dieser Verfahrensvariante sieht vor, dass in Schritt b1) die Werkzeugschneide ausschließlich senkrecht von der zu erzeugenden Oberfläche des Werkstücks weg bewegt wird, und dass in Schritt b2) die Werkzeugschneide ausschließlich parallel zur zu erzeugenden Oberfläche des Werkstücks bewegt wird. Mit diesen Orientierungen sind die Abläufe der Unterschritte b1) und b2) leicht separat einstellbar und optimierbar. Alternativ kann beispielsweise auch die Werkzeugschneide in Schritt a) stets senkrecht zur Drehachse, und in Schritt b2) stets parallel zur Drehachse des Werkstücks verfahren werden.

Eine vorteilhafte alternative Verfahrensvariante sieht vor, dass die Unterschritte b1) und b2) gleichzeitig stattfinden. Dadurch kann die Zahl der Bewegungsschritte der Werkzeugschneide im Verfahren minimiert werden, und so der Verfahrensablauf insgesamt beschleunigt werden.

Bevorzugt ist weiterhin eine erfindungsgemäße Verfahrensvariante, bei der in Schritt a) bei der Bewegung der Werkzeugschneide auf die zu erzeugende Oberfläche des Werkstücks zu die Werkzeugschneide ausschließlich senkrecht zur zu erzeugenden Oberfläche des Werkstücks bewegt wird. Diese Art des Einstechens stellt im Wesentlichen identische neue Konturabschnitte (=Rille) beim Einstechen sicher. Die Rauhigkeit der gefertigten rationssymmetrischen Fläche ist am Werkstück überall gleich und insbesondere unabhängig vom lokalen Winkel zwischen der erzeugten Oberfläche und der Drehachse des Werkstücks. Bei dieser Verfahrensvariante wird die gesamte Verfahrstrecke VP im Schritt b) zurückgelegt. Alternativ zur obigen Verfahrensvariante kann beispielsweise auch das Einstechen stets senkrecht zur Drehachse des Werkstücks erfolgen.

Weiterhin bevorzugt ist eine Variante des erfindungsgemäßen Verfahrens, die dadurch gekennzeichnet ist, dass in Schritt a) die Werkzeugschneide im eingestochenen Zustand einen geringen Vorschub EV parallel zur zu erzeugenden Oberfläche des Werkstücks erfährt, wobei für die Einstichtiefe ET, die die Werkzeugschneide beim Einstechen senkrecht zur zu erzeugenden Oberfläche des Werkstücks in das Werkstück eindringt, und den Vorschub EV gilt: ET ≥ EV, bevorzugt ET ≥ 5*EV. Durch den Vorschub EV im eingestochenen Zustand wird die Werkzeugschneide im eingestochenen Zustand unter Schnittkraft gehalten, wodurch ein Rattern der Werkzeugschneide vermieden wird. Eine zugehörige Rille weist dann zwar eventuell in sich einen geringfügigen Drall auf; durch das anschließende Abheben und erneute Zustellen des Werkzeugs setzt sich dieser Drall aber nicht in der nächstfolgenden Rille fort, und die Gesamtfläche ist wiederum drallfrei.

Ganz besonders bevorzugt ist eine Variante des erfindungsgemäßen Verfahrens, bei der als Werkzeugschneide eine geometrisch bestimmte Schneide verwendet wird, insbesondere ein Drehstahl oder eine Wendeschneidplatte mit einem Wendeschneidradius von 1 mm oder weniger, insbesondere ca. 0,8 mm. Mit anderen Worten wird in dieser Variante das Verfahren zum Drehen mit einem Drehwerkzeug genutzt. Beim Drehen kann besonders ausgeprägter Drall entstehen, und somit kommen die Vorteile der Erfindung, insbesondere die Drallfreiheit der erzeugten Oberfläche, besonders gut zur Geltung.

In einer alternativen Verfahrensvariante wird als Werkzeugschneide eine geometrisch unbestimmte Schneide verwendet, insbesondere eine rotierende Schleifscheibe. Mit anderen Worten wird in dieser Variante das Verfahren zum Schleifen genutzt. Das erfindungemäße Verfahren verbessert auch hier die Qualität der erzeugten Oberflächen.

Bevorzugt ist auch eine Verfahrensvariante, die dadurch gekennzeichnet ist, dass die Länge der Verfahrstrecke VP 0,2 mm oder weniger, insbesondere ca. 0,1 mm beträgt. Diese Verfahrstrecken haben sich in der Praxis bewährt und gestatten eine zügige Verfahrensdurchführung bei geringen Oberflächenrauhigkeiten der erzeugten Oberflächen, unter Verwendung von üblichen Schneidengeometrien.

Bei einem Werkstück mit einer rotationssymmetrischen Fläche, die nach einem obigen, erfindungemäßen Verfahren gefertigt ist, weist die rotationssymmetrische Fläche eine charakteristische Oberflächenstruktur "Rille an Rille" auf.

Weitere Vorteile der Erfindung ergeben sich aus der Beschreibung und der Zeichnung.

Die gezeigten und beschriebenen Ausführungsformen sind nicht als abschließende Aufzählung zu verstehen, sondern haben vielmehr beispielhaften Charakter für die Schilderung der Erfindung.

### Zeichnung und detaillierte Beschreibung der Erfindung

Die Erfindung ist in der Zeichnung dargestellt und wird anhand von Ausführungsbeispielen näher erläutert. Es zeigt:
- Fig.1: ein Werkstück und eine Werkzeugschneide im eingestochenen Zustand, zu einem ersten Zeitpunkt des erfindungsgemäßen Verfahrens;
- Fig. 2: das Werkstück und die Werkzeugschneide von Fig. 1, zu einem zweiten Zeitpunkt nach dem Abheben (gestrichelte Linie) und einem dritten Zeitpunkt nach dem Vorschub (durchgezogene Linie);
- Fig. 3: das Werkstück und die Werkzeugschneide von Fig. 1 und Fig. 2 nochmals nach dem Umpositionieren zum dritten Zeitpunkt (gestrichelte Linie) und nach erneutem Einstechen zu einem vierten Zeitpunkt (durchgezogene Linie);
- Fig. 4a: ein Schema eines Verfahrwegs der Unterkante einer Werkzeugschneide gemäß einer erfindungsgemäßen Verfahrensvariante, wobei die Werkzeugschneide beim Vorschub Material des Werkstücks abträgt;
- Fig. 4b: ein Schema ähnlich Fig. 4a, wobei die das Abheben und der Vorschub in einem kombinierten Verfahrschritt erfolgt;
- Fig. 4c: ein Schema ähnlich Fig. 4a, wobei im eingestochenen Zustand ein Vorschub EV angewandt wird;
- Fig. 4d: ein Schema ähnlich Fig. 4a, wobei beim Abheben bereits die Werkzeugschneide vorgeschoben wird und beim Vorschieben bereits eine Annäherung an das Werkstück erfolgt;
- Fig. 4e: ein Schema ähnlich Fig. 4a, wobei sich der gesamte Abhebeweg AW auf das Abheben und einen Teilschritt des Vorschubs verteilt;
- Fig. 5a: eine Darstellung von Werkzeug und Werkstück für die erfindungsgemäße Verfahrensvariante Drehen;
- Fig. 5b: eine Darstellung von Werkzeug und Werkstück für die erfindungsgemäße Verfahrensvariante Schleifen.

Alle Figuren zeigen Größenverhältnisse von Werkstück und Werkzeug/Werkzeugschneide sowie die Verfahrwege lediglich schematisch und nicht maßstäblich.

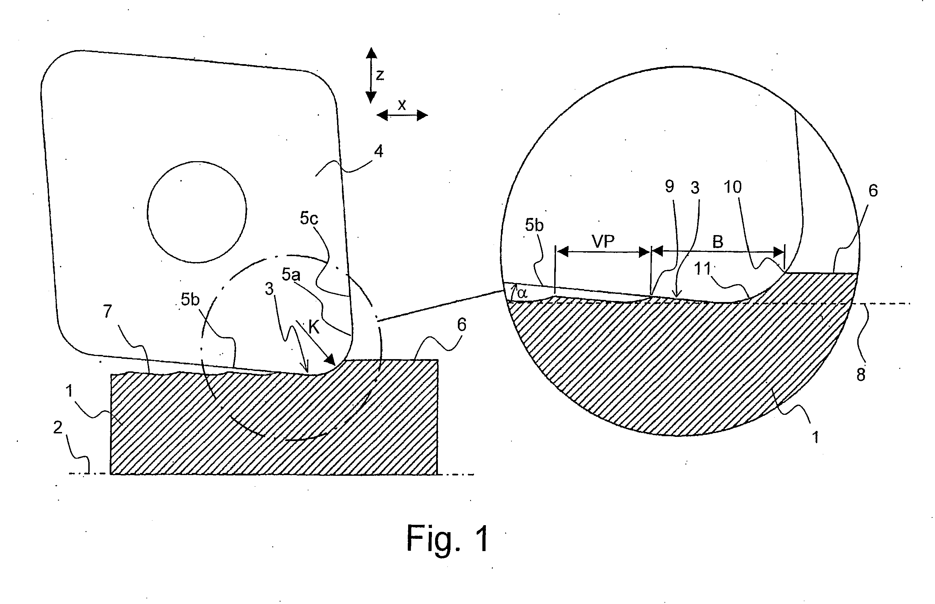

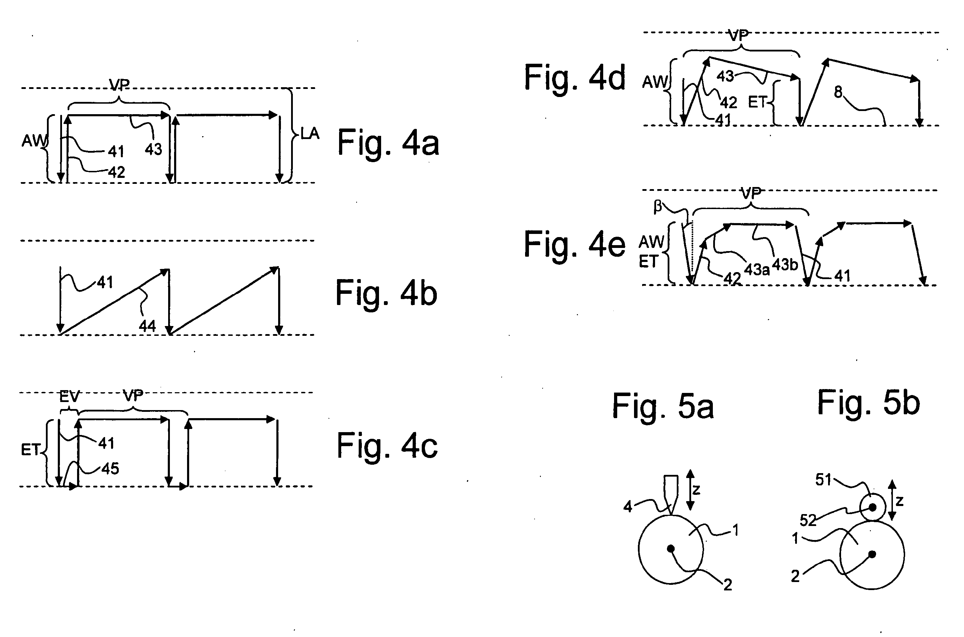

Die Figuren 1 bis 3 illustrieren den Ablauf des erfindungsgemäßen Verfahrens zur Erzeugung einer rotationssymmetrischen Fläche am Beispiel einer Drehbearbeitung. Die erzeugte rotationssymmetrische Fläche ist eine Kreiszylindermantelfläche. In den Figuren 1 bis 3 ist jeweils links eine Überblicksdarstellung gezeigt, und rechts eine Vergrößerung eines Ausschnitts, der durch einen strichpunktierten Kreis markiert ist. Der Verfahrensablauf entspricht dem Ablaufschema von Fig. 4a (siehe dort), und ist geprägt von einem ständigen Wechsel von Einstichdrehen und Längsdrehen.

Fig. 1 zeigt ein Werkstück 1, welches um eine Drehachse 2 rotiert. Das Werkstück 1 ist dabei zur Vereinfachung nur teilweise dargestellt. In das Werkstück 1 ist eine Werkzeugschneide 3 eines Werkzeugs eingestochen.

Das Werkzeug ist als Wendeschneidplatte 4 ausgebildet. Die Wendeschneidplatte 4 besitzt in der Mitte eine Ausnehmung, um die Wendeschneidplatte 4 an einer Drehmaschine in verschiedenen Lagen zu befestigen. Die Drehmaschine kann die Wendeschneidplatte 4 (und damit auch die Werkzeugschneide 3) in die Richtungen z und x verschieben, die senkrecht und parallel zur Drehachse 2 verlaufen.

Die Werkzeugschneide 3 umfasst im rechten unteren Teil einen kreisbogenförmigen Bereich 5a mit Krümmungsradius K, der sowohl nach links als auch nach oben hin jeweils in einen geraden Bereich 5b, 5c übergeht. Der Krümmungsradius K beträgt hier 0,8mm.

Rechts von der Werkzeugschneide 3 ist das Werkstück 1 noch nicht abgedreht und weist eine unbearbeitete Kontur 6 auf. Links von der Werkzeugschneide 3 ist das Werkstück 1 bereits erfindungsgemäß bearbeitet worden und weist daher eine erzeugte Kontur 7 auf.

Die erzeugte Kontur 7 ist periodisch leicht gewellt, mit einer Periodenlänge entsprechend einer Verfahrstrecke VP (dazu unten). Damit weist die erzeugte Kontur 7 eine gewisse Rauhigkeit auf. Die erzeugte Kontur 7 nähert eine zu erzeugende Kontur beziehungsweise eine zugehörige, zu erzeugende Oberfläche 8 des Werkstücks 1 an. Die zu erzeugende Oberfläche 8 repräsentiert die rotationssymmetrische Fläche, die am Werkstück 1 gefertigt werden soll. Bei geeigneter Wahl der Verfahrensparameter kann die Rauhigkeit der erzeugten Kontur 7 sehr gering (insbesondere 1 µm oder weniger von Maximum zu Minimum) eingestellt werden, so dass die erzeugte Kontur 7 nur vernachlässigbar von der zu erzeugenden Oberfläche 8 bzw. der zu erzeugenden Kontur abweicht. Vorliegend tangiert die zu erzeugende Oberfläche 8 die Minima in der gewellten, erzeugten Kontur 7.

In der Figur 1 ist die Werkzeugschneide 3 in einem eingestochenen Zustand dargestellt, und zwar nach einer vollen Umdrehung des Werkstücks 1 im eingestochenen Zustand der Werkzeugschneide 3. Die Werkzeugschneide 3 hat zwischen den Stellen 9 und 10 Material vom Werkstück 1 abgetragen, und im dargestellten Zustand nur zwischen den Stellen 9 und 10 Kontakt zum Werkstück 1. Der Abschnitt der Werkzeugschneide 3 zwischen den Stellen 9 und 10 wird auch die "aktive Werkzeugscheide" genannt. Die Werkzeugschneide 3 hat einen zwischen den Stellen 9 und 10 gelegenen neuen Konturabschnitt 11 am Werkstück 1 geschaffen. Dieser neue Konturabschnitt 11 wird auch als "Rille" bezeichnet. Der neue Konturabschnitt 11 hat eine Breite B. Die Breite B wird dabei gemessen in einer Richtung, die parallel zur zu erzeugenden Oberfläche 8 bzw. zu erzeugenden Kontur verläuft.

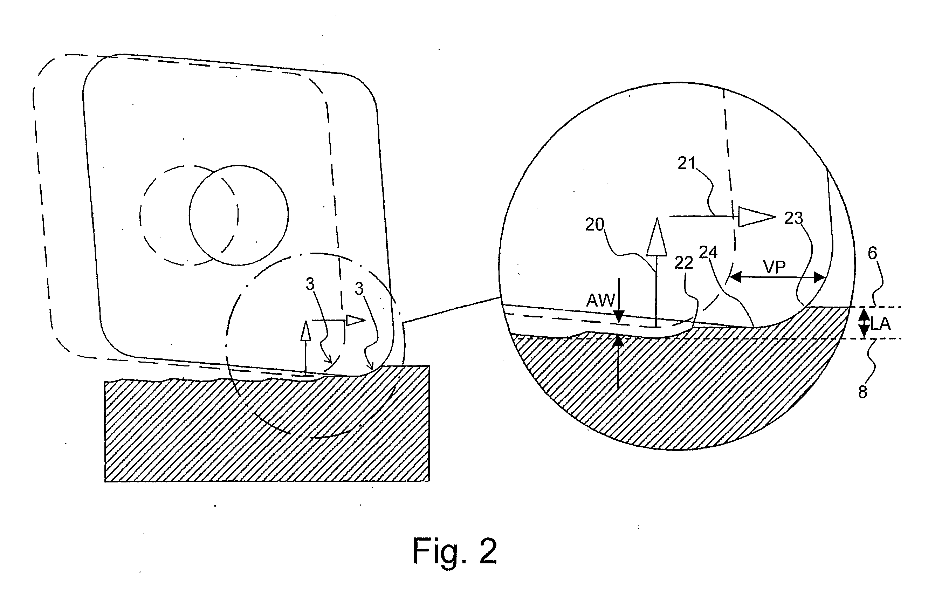

Es soll nunmehr die erzeugte Kontur 7 nach rechts erweitert werden. Dazu wird vorgegangen wie in Fig. 2 dargestellt.

Zunächst wird die Werkzeugschneide 3 in Pfeilrichtung 20 vom Werkstück 1 abgehoben; die Position der Werkzeugschneide 3 nach dem Abheben ist gestrichelt dargestellt. Dieses Abheben erfolgt im dargestellten Fall senkrecht zur zu erzeugenden Oberfläche 8. Der zurückgelegte Abhebeweg in dieser Richtung ist AW. Der Abhebeweg AW ist dabei kleiner als das lokale Aufmaß LA, das ist der Abstand von zu erzeugender Oberfläche 8 und unbearbeiteter Werkstückoberfläche bzw. unbearbeiteter Kontur 6, gemessen senkrecht zur zu erzeugenden Oberfläche 8. Beispielsweise kann gewählt werden AW=0,01 mm und LA=0,3mm.

Sodann wird die Werkszeugschneide 3 in Pfeilrichtung 21 vorgeschoben; die Position der Werkzeugschneide 3 nach dem Vorschub ist mit durchgezogener Linie dargestellt. Dieser Vorschub erfolgt im dargestellten Fall parallel zur zu erzeugenden Oberfläche 8. Der zurückgelegte Vorschubweg in dieser Richtung, genannt Verfahrstrecke, ist VP. Die Länge der Verfahrstrecke VP ist hier deutlich kleiner als die Breite B aus Fig. 1. Beispielsweise kann gewählt werden VP=0,1mm. Während des Vorschubs, vgl. Pfeilrichtung 21, trägt die Werkzeugschneide 3 Material vom Werkstück 1 ab, d.h. es erfolgt ein Längsdrehen am Werkstück 1. Im Rahmen dieses Längsdrehens entsteht zwischen den Stellen 22 und 23 am Werkstück 1 ein Interimskonturabschnitt 24. Dieser Interimskonturabschnitt 24 ist gegenüber der zu erzeugenden Oberfläche 8 bzw. der zu erzeugenden Kontur deutlich zurückgesetzt und weist einen Drall auf.

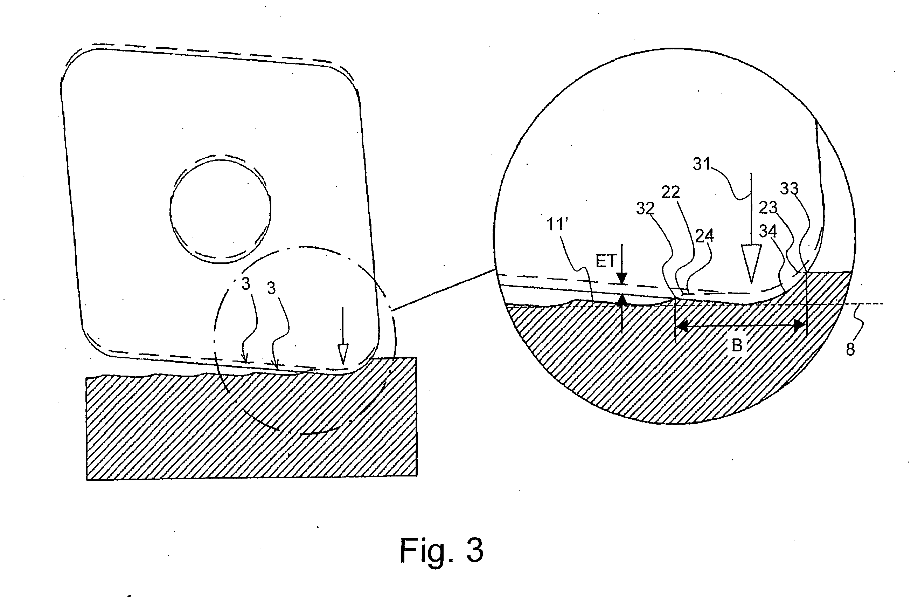

Dieser Drall wird jedoch nicht in das fertige Werkstück eingehen, denn der Interimskonturabschnitt 24 wird beim nachfolgenden Einstechen durch Einstechdrehen wieder abgetragen, wie die Fig. 3 zeigt.

Die Position der Werkzeugschneide 3 nach dem Vorschub ist gestrichelt in Fig. 3 dargestellt, ebenso ist der zugehörige Interimskonturabschnitt 24 gestrichelt dargestellt.

Von dieser Position aus wird die Werkzeugschneide 3 in Pfeilrichtung 31 in das Werkstück 1 eingestochen. Dieses Einstechen erfolgt im dargestellten Fall senkrecht zur zu erzeugenden Oberfläche 8. Die von der Werkzeugschneide 3 in dieser Richtung zurückgelegte Einstichtiefe ist ET. Im dargestellten Fall gilt ET=AW. Bewährt hat sich ET ≤ 0,02mm, insbesondere ca. 0,01 mm. Nach dem Einstechen und nach wenigstens einer Umdrehung des Werkstücks in der eingestochenen Position ist zwischen den Stellen 32 und 33 ein neuer Konturabschnitt 34 des Werkstücks 1 entstanden, der wiederum die Breite B aufweist.

Von dem in Figur 1 dargestellten, neu erstellten Konturabschnitt 11 ist in Figur 3 nur noch eine Restkontur 11' verblieben. Der rechte Teil des Konturabschnitts 11 ist abgetragen worden und im neuen Konturabschnitt 34 aufgegangen. Die Restkontur 11' besitzt eine Erstreckung in Richtung parallel zur zu erzeugenden Oberfläche 8 von VP, wobei VP < B, vgl. dazu Fig. 1. An die Restkontur 11' schließt sich der neu erstellte Konturabschnitt 34 unmittelbar an.

Das Verfahren wird durch weitere Zyklen von Abheben, Vorschub und Einstechen fortgesetzt. Bei einer Verfahrstrecke VP von ca. 0,1 mm und einer zu fertigenden gesamten Breite einer rotationssymmetrischen Fläche von 1 cm sind beispielsweise 100 Zyklen notwendig. Es entsteht eine erzeugte Kontur 7, die aus einer Abfolge von Restkonturen (wie die Restkontur 11') besteht. Die Restkonturen haben ihre Gestalt durch Einstichdrehen erhalten.

Die Rauhigkeit der erzeugten Kontur 7 ist eine Funktion von (in erster Linie) der Verfahrstrecke VP und der Form der Werkzeugschneide 3. Je kleiner die Verfahrstrecke VP, um so geringer ist die Rauhigkeit. Weiterhin ist die Rauhigkeit um so geringer, je geringer der Winkel α zwischen zu erzeugender Oberfläche 8 und dem geraden Abschnitt 5b der Werkzeugschneide 3 ist, vgl. Fig. 1. Bevorzugt sind Winkel α von 0° bis 5°, insbesondere 1 ° bis 2°. Man beachte, dass im Rahmen der Erfindung auch "Wiper"-Schneiden eingesetzt werden können, die anstelle eines geraden Abschnitts 5b einen Abschnitt mit einem (verglichen mit dem Krümmungsradius K des kreisförmigen Abschnitts 5a) größeren Krümmungsradius K' aufweisen.

Die Figuren 4a bis 4e zeigen eine Reihe von Verfahrschemata für eine Werkzeugschneide im Rahmen des erfindungsgemäßen Verfahrens. Durch die Pfeile dargestellt ist jeweils der Weg des Teils der Werkzeugschneide, der am weitesten zur zu erzeugenden Oberfläche 8 vordringt (=Unterkante). Als weitere Orientierung ist die unbearbeitete Kontur 6 des Werkstücks dargestellt. Es sind jeweils drei Einstichpositionen und die Verfahrschritte zwischen diesen Einstichpositionen dargestellt.

Figur 4a zeigt die erfindungsgemäße Verfahrensvariante, die in den Figuren 1 bis 3 illustriert ist. Einstechen 41 und Abheben 42 haben gleiche Weglängen und erfolgen senkrecht zur zu erzeugenden Oberfläche 8. Der Abhebeweg AW ist kleiner als das lokale Aufmaß LA, so dass beim Vorschub 43 die Werkszeugschneide durch das Material getrieben wird. Der Vorschub 43 erfolgt parallel zur zu erzeugenden Oberfläche 8.

Figur 4b zeigt eine Verfahrensvariante, bei der das Abheben und der Vorschub zu einem kombinierten Verfahrschritt 44 vereinigt sind. Dadurch kann der Verfahrensablauf beschleunigt werden.

Figur 4c zeigt eine Verfahrensvariante ähnlich Fig. 4a, wobei nach dem Einstechen 41, und zwar zumindest während der ersten Umdrehung des Werkstücks im eingestochenen Zustand der Werkzeugschneide, ein geringer Einstichvorschub 45 der Länge EV angewandt wird. Durch den Einstichvorschub 45 wird die Werkzeugschneide im eingestochenen Zustand unter Spannung gehalten, was ein Rattern verhindert. Bevorzugt ist EV sehr viel kleiner als VP, insbesondere mit VP > 10*EV oder VP > 50*EV. Man beachte, dass bei dieser Verfahrensvariante auch der Einstichvorschub 45 zur Länge der Verfahrstrecke VP beiträgt.

Figur 4d zeigt eine Verfahrensvariante, bei der schon beim Abheben 42 eine Bewegung auf die nächste Einstichposition zu vorgenommen wird. Außerdem wird beim Vorschub 43 schon eine Annäherung an die zu erzeugende Oberfläche 8 vorgenommen, so dass der Abhebeweg AW größer ist als die Einstichtiefe ET.

Figur 4e zeigt eine Verfahrensvariante, bei der das Einstechen 41 unter einem Winkel erfolgt, der geringfügig von der Richtung senkrecht zur zu erzeugenden Oberfläche 8 abweicht. Der Abweichungswinkel β ist bevorzugt so klein gewählt, dass sich während des Einstechens der neu entstehende Konturabschnitt in beide Richtungen (nach links und rechts) parallel zur zu erzeugenden Oberfläche verbreitert. Weiterhin weist der Vorschub zwei Teilschritte 43a, 43b auf. Im Teilschritt 43a wird die Werkzeugschneide noch weiter von der zu erzeugenden Oberfläche 8 entfernt als dies schon im Rahmen des Abhebens 42 erfolgte, d.h. sowohl das Abheben 42 als auch der

Teilschritt 43a tragen zum Abhebeweg AW bei. Mit dem Ende des Teilschritts 43b wird die Position für das nächste Einstechen 41 erreicht. Man beachte, dass bei dieser Verfahrensvariante auch das Einstechen 41 zur Länge der Verfahrstrecke VP zwischen zwei eingestochenen Positionen des Werkzeugs beiträgt.

Erfindungsgemäß kann ein Verfahrenszyklus mit Einstechen, Abheben und Vorschub, falls gewünscht, in eine Vielzahl von Teilschritten zerlegt werden, insbesondere in noch mehr Teilschritte als in den Figuren 4a bis 4e gezeigt. Dabei können die Teilschritte auch gekrümmte Verfahrwege, etwa Kreisbahnen, umfassen.

Figur 5a zeigt einen Grundaufbau zur Durchführung der erfindungsgemäßen Verfahrensvariante mit Drehen in Aufsicht. Ein Werkstück 1 rotiert um eine zentrale Drehachse 2. Eine Wendeschneidplatte 4 (oder ein anderes Drehwerkzeug) kann in Richtung z auf die Drehachse 2 zu und von ihr weg verfahren werden. Weiterhin kann die Werkzeugschneide 3 senkrecht zur Zeichenebene in x-Richtung verfahren werden (nicht dargestellt). Diese Freiheitsgrade der Wendeschneidplatte 4 reichen für das erfindungsgemäße Verfahren aus. Eine typische Drehzahl des Werkstücks beträgt 800-1000 U/min.

Figur 5b zeigt einen Grundaufbau zur Durchführung der erfindungsgemäßen Verfahrensvariante mit Schleifen in Aufsicht. Ein Werkstück 1 rotiert um eine zentrale Drehachse 2. Eine Schleifscheibe 51 rotiert um eine Schleifscheibenachse 52, die parallel zur Drehachse 2 verläuft. Die Schleifscheibe 51 kann in Richtung z auf die Drehachse 2 zu und von ihr weg verfahren werden. Weiterhin kann die Schleifscheibe 51 senkrecht zur Zeichenebene in x-Richtung verfahren werden (nicht dargestellt). Diese Freiheitsgrade der Schleifscheibe 51 reichen für das erfindungsgemäße Verfahren aus. Die Drehzahl der Schleifscheibe 51 ist deutlich geringer als die Drehzahl des Werkstücks.

Die Erfindung betrifft ein Verfahren, insbesondere Drehverfahren, zur Fertigung einer rotationssymmetrischen Fläche an einem rotierenden Werkstück (1), wobei eine Werkszeugschneide (3) viele Male in das Werkstück (1) eingestochen wird. Beim Einstechen (41) entsteht jeweils ein neuer Konturabschnitt (11; 34), auch genannt Rille. Die Einstichpositionen liegen so dicht, dass die resultierende, erzeugte Kontur (7) am Werkstück (1) ausschließlich aus aneinandergrenzenden Restkonturen oder Restrillen (11') besteht, die aus den neuen Konturabschnitten oder Rillen (11; 34) hervorgegangen sind. Etwaige Interimskonturabschnitte (24), die beim Umpositionieren der Werkzeugschneide (3) zwischen den Einstichpositionen entstanden sind, werden beim nachfolgenden Einstechen (41) wieder beseitigt. Die resultierende rotationssymmetrische Fläche ist drallfrei. Das Verfahren kann mit herkömmlichen Drehmaschinen durchgeführt werden.

## Patentansprüche

1. Verfahren zur Fertigung einer rotationssymmetrischen Fläche an einem Werkstück (1),
wobei das Werkstück (1) rotiert und eine Werkzeugschneide (3) mit der Oberfläche des Werkstücks (1) in Eingriff gebracht wird,
mit folgenden Schritten:
a) Die Werkzeugschneide (3) wird in das rotierende Werkstück (1) eingestochen, wobei die Werkzeugschneide (3) auf die zu erzeugende Oberfläche (8) des Werkstücks (1) zu bewegt wird,
und wobei ein neuer Konturabschnitt (11; 34) am Werkstück (1) geschaffen wird, der eine Breite B aufweist gemessen parallel zu der zu erzeugenden Oberfläche (8) des Werkstücks (1),
wobei bei Schritt a) die Werkzeugschneide (3) während mindestens einer Umdrehung des Werkstücks (1) in der eingestochenen Position verbleibt,
b) Die Werkzeugschneide (3) wird anschließend umpositioniert mit - folgenden Unterschritten:
b1) Die Werkzeugschneide (3) wird vom Werkstück (1) abgehoben, wobei die Werkzeugschneide (3) eine Bewegungskomponente senkrecht weg von der zu erzeugenden Oberfläche (8) des Werkstücks (1) erfährt;
b2) Die Werkzeugschneide (3) wird vorgeschoben, wobei die Werkzeugschneide (3) eine Bewegungskomponente parallel zur zu erzeugenden Oberfläche (8) des Werkstücks (1) erfährt;
wobei im gesamten Schritt b) ein maximaler Abhebeweg AW senkrecht von der zu erzeugenden Oberfläche (8) des Werkstücks (1) weg kleiner ist als das lokale Aufmaß LA des Werkstücks (1),
wobei die gesamte Länge der Verfahrstrecke VP der Werkzeugschneide (3) parallel zur zu erzeugenden Oberfläche (8) des Werkstücks (1) in den Schritten a) und b) kleiner oder gleich der Breite B ist;
c) die Schritte a) bis b) werden mehrfach wiederholt.

2. Verfahren nach Anspruch 1, **dadurch gekennzeichnet, dass** der Abhebeweg AW 0,02 mm oder weniger beträgt, insbesondere ca. 0,01 mm.

3. Verfahren nach Anspruch 1 oder 2, **dadurch gekennzeichnet, dass** das lokale Aufmaß LA 0,1 mm bis 0,4 mm beträgt, insbesondere ca. 0,3 mm.

4. Verfahren nach einem der vorhergehenden Ansprüche, **dadurch gekennzeichnet, dass** bei Schritt a) die Werkzeugschneide (3) während genau einer Umdrehung des Werkstücks (1) in der eingestochenen Position verbleibt.

5. Verfahren nach einem der vorhergehenden Ansprüche, **dadurch gekennzeichnet, dass** der Unterschritt b1) vor dem Unterschritt b2) erfolgt.

6. Verfahren nach Anspruch 5, **dadurch gekennzeichnet,**
**dass** in Schritt b1) die Werkzeugschneide (3) ausschließlich senkrecht von der zu erzeugenden Oberfläche (8) des Werkstücks (1) weg bewegt wird,
und **dass** in Schritt b2) die Werkzeugschneide (3) ausschließlich parallel zur zu erzeugenden Oberfläche (8) des Werkstücks (1) bewegt wird.

7. Verfahren nach einem der Ansprüche 1 bis 4, **dadurch gekennzeichnet, dass** die Unterschritte b1) und b2) gleichzeitig stattfinden.

8. Verfahren nach einem der vorhergehenden Ansprüche, **dadurch gekennzeichnet, dass** in Schritt a) bei der Bewegung der Werkzeugschneide (3) auf die zu erzeugende Oberfläche (8) des Werkstücks (1) zu die Werkzeugschneide (3) ausschließlich senkrecht zur zu erzeugenden Oberfläche (8) des Werkstücks (1) bewegt wird.

9. Verfahren nach einem der vorhergehenden Ansprüche, **dadurch gekennzeichnet, dass** in Schritt a) die Werkzeugschneide (3) im eingestochenen Zustand einen geringen Vorschub EV parallel zur zu erzeugenden Oberfläche (8) des Werkstücks (1) erfährt, wobei für die Einstichtiefe ET, die die Werkzeugschneide (3) beim Einstechen senkrecht zur zu erzeugenden Oberfläche (8) des Werkstücks (1) in das Werkstück (1) eindringt, und den Vorschub EV gilt: ET ≥ EV, bevorzugt ET ≥ 5*EV.

10. Verfahren nach einem der vorhergehenden Ansprüche, **dadurch gekennzeichnet, dass** als Werkzeugschneide (3) eine geometrisch bestimmte Schneide verwendet wird, insbesondere ein Drehstahl oder eine Wendeschneidplatte (4) mit einem Wendeschneidradius (K) von 1 mm oder weniger, insbesondere ca. 0,8 mm.

11. Verfahren nach einem der Ansprüche 1 bis 9, **dadurch gekennzeichnet, dass** als Werkzeugschneide (3) eine geometrisch unbestimmte Schneide verwendet wird, insbesondere eine rotierende Schleifscheibe (51).

12. Verfahren nach einem der vorhergehenden Ansprüche, **dadurch gekennzeichnet, dass** die Länge der Verfahrstrecke VP 0,2 mm oder weniger, insbesondere ca. 0,1 mm beträgt.

## Claims

1. A method of producing a rotationally symmetrical surface on a workpiece (1),
wherein the workpiece (1) rotates and a cutting edge (3) is brought into engagement with the surface of the workpiece (1), comprising the following steps:
a) the cutting edge (3) is inserted into the rotating workpiece (1), wherein the cutting edge (3) is moved towards the surface (8) to be generated on the workpiece (1),
and wherein a new contour portion (11; 34) is formed on the workpiece (1) and has a width B, measured parallel to the surface (8) to be generated on the workpiece (1),
wherein in step a) the cutting edge (3) remains in the inserted position during at least one revolution of the workpiece (1),
b) the cutting edge (3) is then repositioned by means of the following sub-steps:
b1) the cutting edge (3) is lifted from the workpiece (1), during which the cutting edge (3) undergoes a movement component perpendicularly away from the surface (8) to be generated on the workpiece (1);
b2) the cutting edge (3) is advanced, during which the cutting edge (3) undergoes a movement component parallel to the surface (8) to be generated on the workpiece (1);
wherein in the whole step b) a maximum lifting path AW perpendicularly away from the surface (8) to be generated on the workpiece (1) is smaller than the local oversize LA of the workpiece (1),
wherein the total length of the displacement path VP of the cutting edge (3) parallel to the surface (8) to be generated on the workpiece (1) in steps a) and b) is smaller than or equal to the width B;
c) steps a) to b) are repeated multiple times.

2. A method according to claim 1, **characterised in that** the lifting path AW amounts to 0.02 mm or less, in particular approximately 0.01 mm.

3. A method according to claim 1 or 2, **characterised in that** the local oversize LA amounts to 0.1 mm to 0.4 mm, in particular approximately 0.3 mm.

4. A method according to any one of the preceding claims, **characterised in that** in step a) the cutting edge (3) remains in the inserted position during precisely one revolution of the workpiece (1).

5. A method according to any one of the preceding claims, **characterised in that** sub-step b1) takes place before sub-step b2).

6. A method according to claim 5, **characterised in that** in step b1) the cutting edge (3) is moved exclusively perpendicularly away from the surface (8) to be generated on the workpiece (1), and **in that** in step b2) the cutting edge (3) is moved exclusively parallel to the surface (8) to be generated on the workpiece (1).

7. A method according to any one of claims 1 to 4, **characterised in that** sub-steps b1) and b2) take place simultaneously.

8. A method according to any one of the preceding claims, **characterised in that** in step a), during the movement of the cutting edge (3) towards the surface (8) to be generated on the workpiece (1), the cutting edge (3) is moved exclusively perpendicularly to the surface (8) to be generated on the workpiece (1).

9. A method according to any one of the preceding claims, **characterised in that** in step a) the cutting edge (3) in the inserted state executes a slight feed movement EV parallel to the surface (8) to be generated on the workpiece (1), wherein for the insertion depth ET, which is the amount by which the cutting edge (3) penetrates the workpiece (1) perpendicularly to the surface (8) to be generated on the workpiece (1) during the insertion process, and for the feed movement EV the following applies: ET ≥ EV, preferably ET ≥ 5*EV.

10. A method according to any one of the preceding claims, **characterised in that** a geometrically defined cutter is used as a cutting edge (3), in particular a lathe tool or an indexable insert (4) with a cutting radius (K) of 1 mm or less, in particular approximately 0.8 mm.

11. A method according to any one of claims 1 to 9, **characterised in that** a geometrically undefined cutter is used as a cutting edge (3), in particular a rotating grinding wheel (51).

12. A method according to any one of the preceding claims, **characterised in that** the length of the displacement path VP amounts to 0.2 mm or less, in particular approximately 0.1 mm.

## Revendications

1. Procédé de fabrication d'une surface à symétrie de révolution sur une pièce d'oeuvre (1), sachant que la pièce (1) tourne et qu'un tranchant d'outil (3) est amené en engagement avec la surface de la pièce (1),
comprenant les étapes suivantes :
a) le tranchant d'outil (3) est enfoncé dans la pièce rotative (1), sachant que le tranchant d'outil (3) est déplacé en direction de la surface à produire (8) de la pièce (1), et sachant qu'une nouvelle portion de contour (11 ; 34) est créée sur la pièce (1), portion qui présente une largeur B, mesurée parallèlement à la surface à produire (8) de la pièce (1), sachant qu'à l'étape a), le tranchant d'outil (3) reste dans la position enfoncée pendant au moins une révolution de la pièce (1),
b) le tranchant d'outil (3) est ensuite repositionné, avec les sous-étapes suivantes:
b1) le tranchant d'outil (3) est dégagé de la pièce (1), sachant que le tranchant d'outil (3) subit une composante de déplacement perpendiculaire à la surface à produire (8) de la pièce (1) et en éloignement de celle-ci ;
b2) le tranchant d'outil (3) est avancé, sachant que le tranchant d'outil (3) subit une composante de déplacement parallèle à la surface à produire (8) de la pièce (1); sachant que pendant toute l'étape b), une course maximale de dégagement AW perpendiculairement à la surface à produire (8) de la pièce (1) et en éloignement de celle-ci est inférieure à la surépaisseur locale LA de la pièce (1),
sachant que la longueur totale de la course de déplacement VP du tranchant d'outil (3) parallèlement à la surface à produire (8) de la pièce (1) pendant les étapes a) et b) est inférieure ou égale à la largeur B ;
c) les étapes a) à b) sont répétées plusieurs fois.

2. Procédé selon la revendication 1, **caractérisé en ce que** la course de dégagement AW est inférieure ou égale à 0,02 mm, en particulier est égale à environ 0,01 mm.

3. Procédé selon la revendication 1 ou 2, **caractérisé en ce que** la surépaisseur locale LA est comprise entre 0,1 mm et 0,4 mm, en particulier est égale à environ 0,3 mm.

4. Procédé selon l'une des revendications précédentes, **caractérisé en ce qu'**à l'étape a), le tranchant d'outil (3) reste dans la position enfoncée pendant exactement une révolution de la pièce (1).

5. Procédé selon l'une des revendications précédentes, **caractérisé en ce que** la sous-étape b1) a lieu avant la sous-étape b2).

6. Procédé selon la revendication 5, **caractérisé**
**en ce qu'**à l'étape b1), le tranchant d'outil (3) est éloigné de la surface à produire (8) de la pièce (1) exclusivement perpendiculairement à celle-ci,
et **en ce qu'**à l'étape b2), le tranchant d'outil (3) est déplacé vers la surface à produire (8) de la pièce (1) exclusivement parallèlement à celle-ci.

7. Procédé selon l'une des revendications 1 à 4, **caractérisé en ce que** les sous-étapes b1) et b2) ont lieu simultanément.

8. Procédé selon l'une des revendications précédentes, **caractérisé en ce qu'**à l'étape a), lors du déplacement du tranchant d'outil (3) en direction de la surface à produire (8) de la pièce (1), le tranchant d'outil (3) est déplacé exclusivement perpendiculairement à la surface à produire (8) de la pièce (1).

9. Procédé selon l'une des revendications précédentes, **caractérisé en ce qu'**à l'étape a), le tranchant d'outil (3) subit dans l'état enfoncé un faible avancement EV parallèlement à la surface à produire (8) de la pièce (1),
sachant qu'on a, pour l'avance EV et pour la profondeur d'enfoncement ET du montant de laquelle le tranchant d'outil (3) pénètre dans la pièce (1) lors de l'enfoncement perpendiculairement à la surface à produire (8) de la pièce (1) : ET ≥ EV, de préférence ET ≥ 5*EV.

10. Procédé selon l'une des revendications précédentes, **caractérisé en ce qu'**on utilise comme tranchant d'outil (3) un tranchant de géométrie déterminée, en particulier un burin de tour ou une plaquette de coupe amovible (4) ayant un rayon de plaquette (K) inférieur ou égal à 1 mm, en particulier approximativement égal à 0,8 mm.

11. Procédé selon l'une des revendications 1 à 9, **caractérisé en ce qu'**on utilise comme tranchant d'outil (3) un tranchant de géométrie indéterminée, en particulier une meule rotative (51).

12. Procédé selon l'une des revendications précédentes, **caractérisé en ce que** la longueur de la course de déplacement VP est inférieure ou égale à 0,2 mm, en particulier est égale à environ 0,1 mm.
